# EUROPÄISCHE PATENTSCHRIFT

(11) **EP 3 651 954 B1**
(45) Veröffentlichungstag und Bekanntmachung des Hinweises auf die Patenterteilung: **17.08.2022**
(21) Anmeldenummer: 18739527.2
(22) Anmeldetag: 10.07.2018
(51) Int. Cl.: B27B 17/00, B27B 17/08, B23D 57/02

(54) **SÄGEANORDNUNG UND VERFAHREN ZUM BETRIEB EINER SÄGEANORDNUNG**
SAWING DEVICE AND PROCESS FOR OPERATING A SAWING DEVICE
DISPOSITIF DE SCIAGE ET PROCÉDÉ DE COMMANDE D'UN DISPOSITIF DE SCIAGE

(30) Priorität: 11.07.2017 AT 505712017
(43) Veröffentlichungstag der Anmeldung: 20.05.2020
(73) Patentinhaber: Prinz GmbH&Co KG, 3382 Loosdorf (AT)
(72) Erfinder: FREITHOFNIGG, Ingo, 3382 Mauer/Melk (AT)
(74) Vertreter: Puchberger & Partner Patentanwälte
(86) Internationale Anmeldenummer: PCT/EP2018/068603
(87) Internationale Veröffentlichungsnummer: WO 2019/011889

(56) Entgegenhaltungen:
- EP-A1- 1 972 418
- AT-A4- 509 321
- CH-A5- 645 569
- US-A- 5 784 941
- US-A1- 2012 037 276

## Beschreibung

Die Erfindung betrifft eine Sägeanordnung und ein Verfahren zum Betrieb einer Sägeanordnung gemäß den Merkmalen der Oberbegriffe der unabhängigen Patentansprüche.

Eine solche Sägeanordnung und ein solches Verfahren sind aus EP 1 972 418 A1 bekannt.

Insbesondere betrifft die Erfindung eine Sägeanordnung mit einer Kettensäge, die zum Ablängen, insbesondere zum Kappen, von großvolumigen Lang- oder Endlosprodukten wie beispielsweise von Bretterstapeln oder von Kunststoffrohren verwendet werden. Gemäß Stand der Technik sind Sägevorrichtungen bekannt, bei denen das Schneidgut einer Kettensäge zugeführt wird. In einem nächsten Schritt wird die Kettensäge über eine Bewegungsvorrichtung ausgehend von einer Grundstellung durch den Sägebereich bewegt, wodurch das Schneidgut abgelängt bzw. gekappt wird. Ist der gewünschte Schnitt durchgeführt, so wird die Säge wieder in ihre Grundstellung befördert. In weiterer Folge wird das Schneidgut weitergefördert, um erneut einen Schnitt durchzuführen. Der Schnitt mit der Kettensäge erfolgt bei herkömmlichen Vorrichtungen immer nur in eine Richtung. Dadurch entsteht beim Rückführen der Kettensäge in ihre Ausgangsstellung ein Leerhub, der die Effizienz des Verfahrens und der Vorrichtung verringert. Grund hierfür ist, dass Kettensägen zur Bearbeitung von großvolumigen Gegenständen nur an jener Seite effizient schneiden können, an der die Kette Richtung Antriebsrad der Kette gezogen wird.

Ferner kann bei herkömmlichen Vorrichtungen auch die Schnittrichtung nicht variiert werden, da die Kettensäge gerade geführt und daher nur in eine Richtung schneiden kann.

Aufgabe der Erfindung ist es nun, die Nachteile des Standes der Technik zu überwinden, und eine Sägeanordnung und ein Verfahren zu schaffen, das eine effiziente Bearbeitung von großvolumigem Schneidgut ermöglicht.

Die erfindungsgemäße Aufgabe wird insbesondere durch die Merkmale der unabhängigen Patentansprüche gelöst.

Die Erfindung betrifft eine Sägeanordnung, umfassend eine Kettensäge mit einer umlaufenden Sägekette und einem Kettenantriebsrad zum Antrieb der Sägekette, wobei die Sägekette, ausgehend von dem Kettenantriebsrad, entlang einer langgestreckten Kontur, zuerst einen von dem Kettenantriebsrad auslaufenden Abschnitt, dann einen Umlenkabschnitt und dann einen Richtung Kettenantriebsrad einlaufenden Abschnitt durchläuft, wobei der auslaufende Abschnitt der Sägekette auf einer Seite der Kettensäge angeordnet ist, wobei der einlaufende Abschnitt der Sägekette auf der gegenüberliegenden Seite der Kettensäge angeordnet ist, und wobei eine Kettensägenschwenkvorrichtung vorgesehen ist, die dazu eingerichtet ist, den einlaufenden Abschnitt der Sägekette in eine wählbare Schnittrichtung zu verschwenken.

Erfindungsgemäß ist vorgesehen, dass die Kettensäge über die Kettensägenschwenkvorrichtung an einer Bewegungsvorrichtung angebracht ist.

Erfindungsgemäß ist vorgesehen, dass die Bewegungsvorrichtung zur Bewegung der Kettensäge durch einen Sägebereich entlang unterschiedlicher, wählbarer Schnittrichtungen eingerichtet ist.

Gegebenenfalls ist vorgesehen, dass eine Vorschubvorrichtung mit einem Vorschubantrieb und einer Vorschubführung zur Bewegung des zu schneidenden Schneidgutes vorgesehen ist, deren Vorschubrichtung insbesondere quer zur Schnittrichtung oder im Wesentlichen normal zum Sägebereich verläuft. Gegebenenfalls ist vorgesehen, dass die Kettensägenschwenkvorrichtung ein erstes Schwenkteil und ein zweites Schwenkteil umfasst, dass das erste Schwenkteil an der Bewegungsvorrichtung angebracht ist und dadurch über die Bewegungsvorrichtung bewegbar ist, dass am zweiten Schwenkteil die Kettensäge angebracht ist und dass das zweite Schwenkteil gegenüber dem ersten Schwenkteil einen gegebenenfalls fixierbaren Schwenkfreiheitsgrad um eine Drehachse aufweist.

Gegebenenfalls ist vorgesehen, dass ein Schwenkantrieb zur gesteuerten Verschwenkung des zweiten Schwenkteils gegenüber dem ersten Schwenkteil und damit auch zur gesteuerten Verschwenkung der Kettensäge vorgesehen ist. Gegebenenfalls ist vorgesehen, dass ein Kettenantrieb zum Antrieb des Kettenantriebsrads und dadurch zum Antrieb der Sägekette vorgesehen ist und dass der Kettenantrieb mit dem zweiten Schwenkteil verbunden und insbesondere drehverbunden ist und/oder an dem zweiten Schwenkteil angebracht ist. Gegebenenfalls ist vorgesehen, dass die Bewegungsvorrichtung einen Bewegungsantrieb und eine Bewegungsführung zur Bewegung der Kettensäge entlang der Schnittrichtungen umfasst.

Erfindungsgemäß ist vorgesehen, dass die Bewegungsvorrichtung einen ersten Betriebsmodus aufweist, in dem die Kettensäge von einer ersten Stellung durch den Sägebereich und durch das Schneidgut in eine zweite Stellung bewegt wird oder bewegbar ist, und dass die Bewegungsvorrichtung einen zweiten Betriebsmodus aufweist, in dem die Kettensäge von der zweiten Stellung wieder durch den Sägebereich und durch das Schneidgut in die erste Stellung bewegt wird oder bewegbar ist.

Gegebenenfalls ist vorgesehen, dass die Bewegungsvorrichtung und die Vorschubvorrichtung einen Betriebsmodus aufweisen, in dem ein schräges Ablängen oder Zerschneiden des Schneidgutes durch gleichzeitiges, synchronisiertes Betreiben der Bewegungsvorrichtung und der Vorschubvorrichtung und durch Schrägstellung der Kettensäge in die schräge Schnittrichtung erfolgt.

Gegebenenfalls ist vorgesehen, dass eine Steuerungseinrichtung zur Steuerung und insbesondere zum gemeinsamen und/oder synchronisierten Betrieb der

Bewegungsvorrichtung und der Vorschubvorrichtung und zur Steuerung der Kettensägenschwenkvorrichtung vorgesehen ist.

Gegebenenfalls ist vorgesehen, dass der Richtung Kettenantriebsrad einlaufende Abschnitt der Sägekette bei allen Schnittrichtungen und/oder in allen Betriebsmodi in Schnittrichtung weist und dadurch entlang der Schnittrichtung vorne angeordnet ist.

Gegebenenfalls ist vorgesehen, dass die Bewegungsvorrichtung als Parallelbewegungsvorrichtung zur Parallelführung der Kettensäge quer und insbesondere normal zur Vorschubrichtung ausgebildet ist.

Gegebenenfalls betrifft die Erfindung ein Verfahren zum Betrieb einer Sägeanordnung, wobei die Sägeanordnung eine Kettensäge mit einer umlaufenden Sägekette und einem Kettenantriebsrad zum Antrieb der Sägekette umfasst, wobei die Sägekette, ausgehend von dem Kettenantriebsrad, entlang einer langgestreckten Kontur, zuerst einen von dem Kettenantriebsrad auslaufenden Abschnitt, dann einen Umlenkabschnitt und dann einen Richtung Kettenantriebsrad einlaufenden Abschnitt durchläuft, wobei der auslaufende Abschnitt der Sägekette auf einer Seite der Kettensäge angeordnet ist, und wobei der einlaufende Abschnitt der Sägekette auf der gegenüberliegenden Seite der Kettensäge angeordnet ist und wobei eine Kettensägenschwenkvorrichtung vorgesehen ist, die dazu eingerichtet ist, den einlaufenden Abschnitt der Sägekette in eine wählbare Schnittrichtung zu verschwenken, wobei eine erste Schnittrichtung gewählt wird, wobei die Kettensäge durch Betätigen der Kettensägenschwenkvorrichtung in die erste Schnittrichtung ausgerichtet wird und wobei das Schneidgut entlang der ersten Schnittrichtung zerschnitten wird.

Gegebenenfalls ist vorgesehen, dass das Schneidgut entlang einer Vorschubrichtung weitergefördert wird, dass eine zweite Schnittrichtung gewählt wird, dass die Kettensäge durch Betätigen der Kettensägenschwenkvorrichtung durch Drehen um eine Drehachse in die zweite Schnittrichtung ausgerichtet wird und dass das Schneidgut entlang der zweiten Schnittrichtung zerschnitten wird.

Gegebenenfalls ist vorgesehen, dass die erste und/oder die zweite Schnittrichtung schräg zur Vorschubrichtung verläuft.

Gegebenenfalls ist vorgesehen, dass zum Zerschneiden des Schneidgutes entlang einer schrägen Schnittrichtung die Kettensäge schräggestellt und dadurch in Schnittrichtung ausgerichtet wird, die Kettensäge während dem Schneidvorgang quer zur Vorschubrichtung bewegt und insbesondere parallelbewegt wird, und das Schneidgut während dem Schneidvorgang entlang der Vorschubrichtung bewegt wird.

Gegebenenfalls ist vorgesehen, dass die Kettensäge zum Zerschneiden entlang der ersten und/oder zweiten Schnittrichtung durch Betätigung einer Bewegungsvorrichtung bewegt wird.

Gegebenenfalls ist vorgesehen, dass das Schneidgut durch Betätigen einer Vorschubvorrichtung entlang der Vorschubrichtung bewegt wird.

Gegebenenfalls ist vorgesehen, dass das Schneidgut durch Betätigen der Bewegungsvorrichtung und der Vorschubvorrichtung abwechselnd entlang der ersten und der zweiten Schnittrichtung abgelängt oder geschnitten wird.

Gegebenenfalls ist vorgesehen, dass der Richtung Kettenantriebsrad einlaufende Abschnitt der Sägekette, beim Zerschneiden entlang der ersten Schnittrichtung und beim Zerschneiden entlang der zweiten Schnittrichtung, in die jeweilige Schnittrichtung weist.

Gegebenenfalls ist vorgesehen,
- dass der auslaufenden Abschnitt der Sägekette auf einer Seite der Kettensäge angeordnet ist,
- dass der einlaufenden Abschnitt der Sägekette auf der gegenüberliegenden Seite der Kettensäge angeordnet ist
- und dass die Kettensäge nach dem Zerschneiden des Schneidgutes entlang der ersten Schnittrichtung und vor dem Zerschneiden des Schneidgutes entlang der zweiten Schnittrichtung, und bei weiteren Schnitten auch nach dem erneuten Zerschneiden des Schneidgutes entlang der zweiten Schnittrichtung und vor dem erneuten Zerschneiden des Schneidgutes entlang der ersten Schnittrichtung, durch Betätigen einer Kettensägenschwenkvorrichtung verschwenkt wird,
- sodass der einlaufende Abschnitt der Sägekette sowohl beim Zerschneiden des Schneidgutes entlang der ersten Schnittrichtung als auch beim Zerschneiden des Schneidgutes entlang der zweiten Schnittrichtung in Schnittrichtung ausgerichtet wird.

Die Erfindung betrifft insbesondere eine Sägeanordnung, umfassend eine Kettensäge mit mindestens einer umlaufenden Sägekette und mindestens einem Kettenantriebsrad zum Antrieb der Sägekette, wobei die Sägekette oder die Sägeketten, jeweils ausgehend von dem Kettenantriebsrad, entlang einer langgestreckten Kontur, zuerst einen von dem Kettenantriebsrad auslaufenden Abschnitt, dann einen Umlenkabschnitt und dann einen Richtung Kettenantriebsrad einlaufenden Abschnitt durchläuft oder durchlaufen.

Bevorzugt ist vorgesehen, dass eine Bewegungsvorrichtung vorgesehen ist, die zur Bewegung der Kettensäge durch einen Sägebereich entlang zweier einander entgegengesetzter Schnittrichtungen eingerichtet ist.

Gegebenenfalls ist vorgesehen, dass die Bewegungsvorrichtung einen Bewegungsantrieb und eine Bewegungsführung zur Bewegung der Kettensäge entlang zweier einander entgegengesetzter Schnittrichtungen umfasst.

Gegebenenfalls ist vorgesehen, dass die Bewegungsvorrichtung einen ersten Betriebsmodus aufweist, in dem die Kettensäge von einer ersten Stellung durch den Sägebereich und durch das Schneidgut in eine zweite Stellung bewegt wird oder bewegbar ist.

Gegebenenfalls ist vorgesehen, dass die Bewegungsvorrichtung einen zweiten Betriebsmodus aufweist, in dem die Kettensäge von der zweiten Stellung wieder durch den Sägebereich und durch das Schneidgut in die erste Stellung bewegt wird oder bewegbar ist.

Gegebenenfalls ist vorgesehen, dass der Richtung Kettenantriebsrad einlaufende Abschnitt der Sägekette oder je einer der Richtung Kettenantriebsrad einlaufenden Abschnitte der Sägeketten bei beiden Schnittrichtungen und/oder in beiden Betriebsmodi in Schnittrichtung weist und dadurch entlang der jeweiligen Schnittrichtung vorne angeordnet ist.

Gegebenenfalls ist vorgesehen, dass die Bewegungsvorrichtung dazu eingerichtet ist, eine Schwenkbewegung, eine geradlinige Bewegung oder eine Kombination aus Schwenkbewegung und geradlinige Bewegung der Kettensäge auszuführen.

Gegebenenfalls ist vorgesehen, dass die Bewegungsvorrichtung als Schwenkbewegungsvorrichtung, als Parallelbewegungsvorrichtung oder als kombinierte Schwenk-Parallelbewegungsvorrichtung ausgebildet ist.

Gegebenenfalls ist vorgesehen, dass der Sägebereich entlang einer Ebene verläuft, die durch die Bewegung der Kettensäge durch die Bewegungsvorrichtung definiert ist.

Gegebenenfalls ist vorgesehen, dass eine Vorschubvorrichtung mit einem Vorschubantrieb und einer Vorschubführung zur Bewegung des zu schneidenden Schneidgutes vorgesehen ist, deren Vorschubrichtung quer zur Schnittrichtung und insbesondere im Wesentlichen normal zum Sägebereich verläuft.

Gegebenenfalls ist vorgesehen, dass der auslaufende Abschnitt der Sägekette auf einer Seite der Kettensäge angeordnet ist, dass der einlaufende Abschnitt der Sägekette auf der gegenüberliegenden Seite der Kettensäge angeordnet ist und dass eine Kettensägenschwenkvorrichtung vorgesehen ist, die dazu eingerichtet ist, den einlaufenden Abschnitt der Sägekette in Schnittrichtung auszurichten.

Gegebenenfalls ist vorgesehen, dass ein einlaufender Abschnitt der Sägekette auf einer Seite der Kettensäge angeordnet ist, dass ein weiterer einlaufender Abschnitt einer zweiten Sägekette auf der gegenüberliegenden Seite der Kettensäge angeordnet ist, und dass bei der Bewegung der Kettensäge entlang der ersten Schnittrichtung und/oder im ersten Betriebsmodus der eine einlaufende Abschnitt und bei der Bewegung der Kettensäge entlang der zweiten Schnittrichtung und/oder im zweiten Betriebsmodus der weitere einlaufende Abschnitt in Schnittrichtung weist.

Gegebenenfalls betrifft die Erfindung ein Verfahren zum Betrieb einer Sägeanordnung, wobei die Sägeanordnung eine Kettensäge mit mindestens einer umlaufende Sägekette und mindestens einem Kettenantriebsrad zum Antrieb der Sägekette umfasst, wobei die Sägekette oder die Sägeketten, jeweils ausgehend von dem Kettenantriebsrad, entlang einer langgestreckten Kontur, zuerst einen von dem Kettenantriebsrad auslaufenden Abschnitt, dann einen Umlenkabschnitt und dann einen Richtung Kettenantriebsrad einlaufenden Abschnitt durchläuft oder durchlaufen, und wobei eine Bewegungsvorrichtung vorgesehen ist, die zur Bewegung der Kettensäge durch einen Sägebereich entlang zweier einander entgegengesetzter Schnittrichtungen eingerichtet ist, umfassend folgende Schritte:
- Zerschneiden des Schneidgutes entlang einer ersten Schnittrichtung durch Betätigen der Bewegungsvorrichtung und Bewegen der Kettensäge entlang der ersten Schnittrichtung durch den Sägebereich,
- anschließend Weiterfördern des Schneidgutes quer zur Schnittrichtung und quer zum Sägebereich durch Betätigen einer Vorschubvorrichtung,
- anschließend Zerschneiden des Schneidgutes entlang einer zweiten Schnittrichtung durch Betätigen der Bewegungsvorrichtung und Bewegen der Kettensäge entlang der zweiten Schnittrichtung durch den Sägebereich,
- wobei bevorzugt die zweite Schnittrichtung der ersten Schnittrichtung entgegengesetzt ist,
- anschließend gegebenenfalls erneutes Weiterfördern des Schneidgutes quer zur Schnittrichtung und quer zum Sägebereich und erneutes Zerschneiden des Schneidgutes entlang der ersten Schnittrichtung durch Betätigen der Bewegungsvorrichtung und Bewegen der Kettensäge entlang der ersten Schnittrichtung durch den Sägebereich.

Gegebenenfalls ist vorgesehen, dass das Schneidgut durch Betätigen der Bewegungsvorrichtung und der Vorschubvorrichtung abwechselnd entlang der ersten und der zweiten Schnittrichtung abgelängt und/oder zerschnitten wird.

Gegebenenfalls ist vorgesehen, dass der Richtung Kettenantriebsrad einlaufende Abschnitt der Sägekette oder einer der Richtung Kettenantriebsrad einlaufenden Abschnitte der Sägeketten beim Zerschneiden entlang der ersten Schnittrichtung und beim Zerschneiden entlang der zweiten Schnittrichtung in die jeweilige Schnittrichtung weist.

Gegebenenfalls ist vorgesehen, dass die Bewegungsvorrichtung, zur Ausführung der Schnittbewegung, die Kettensäge schwenkt, geradlinig bewegt oder eine Kombination aus einer Schwenkbewegung und einer geradlinigen Bewegung ausführt. Gegebenenfalls ist vorgesehen, dass der Sägebereich entlang einer Ebene verläuft, die durch die Bewegung der Kettensäge durch die Bewegungsvorrichtung definiert ist.

Gegebenenfalls ist vorgesehen, dass der auslaufende Abschnitt der Sägekette auf einer Seite der Kettensäge angeordnet ist,
- dass der einlaufende Abschnitt der Sägekette auf der gegenüberliegenden Seite der Kettensäge angeordnet ist,
- und dass die Kettensäge nach dem Zerschneiden des Schneidgutes entlang der ersten Schnittrichtung und vor dem Zerschneiden des Schneidgutes entlang der zweiten Schnittrichtung, und bei weiteren Schnitten auch nach dem erneuten Zerschneiden des Schneidgutes entlang der zweiten Schnittrichtung und vor dem erneuten Zerschneiden des Schneidgutes entlang der ersten Schnittrichtung, durch Betätigen einer Kettensägenschwenkvorrichtung verschwenkt wird, insbesondere um 180° verschwenkt wird, sodass der einlaufende Abschnitt der Sägekette sowohl beim Zerschneiden des Schneidgutes entlang der ersten Schnittrichtung als auch beim Zerschneiden des Schneidgutes entlang der zweiten Schnittrichtung in Schnittrichtung ausgerichtet wird.

Bevorzugt ist vorgesehen, dass, entlang der Schnittrichtungen, vor und nach dem Sägebereich, je ein Freiraum zur Aufnahme der Kettensäge während der Weiterförderung des Schneidgutes in Vorschubrichtung und/oder zur Drehung der Kettensäge für eine Ausrichtung in eine der Schnittrichtungen vorgesehen ist.

In allen Ausführungsformen kann vorgesehen sein, dass die Sägeanordnung ein Maschinengestell umfasst, auf dem die Komponenten der Sägeanordnung angebracht sind, sodass eine bodenstehende Sägeanordnung gebildet wird.

In allen Ausführungsformen ist bevorzugt vorgesehen, dass die Kontur der Sägekette bzw. die Konturen der Sägeketten und die Schnittrichtungen in einer gemeinsamen Ebene liegen.

Gegebenenfalls ist in allen Ausführungsformen eine Steuerungseinrichtung zur Steuerung der Antriebe, insbesondere der Bewegungsvorrichtung, der Vorschubvorrichtung und der Kettensägenschwenkvorrichtung vorgesehen. Diese Steuerungseinrichtung kann eine herkömmliche Steuerungseinrichtung sein, die dazu eingerichtet ist, die Antriebe der unterschiedlichen Komponenten zu steuern. Insbesondere ist dies vorteilhaft oder notwendig, wenn eine Steuerung eines Antriebs in Abhängigkeit eines weiteren Antriebs, beispielsweise bei der Durchführung einer schrägen Schnittbewegung, vorgenommen werden soll. Bei einer schrägen Schnittbewegung ist die Steuerungseinrichtung insbesondere dazu geeignet oder eingerichtet, eine proportionale Bewegung der Bewegungsvorrichtung gegenüber der Vorschubvorrichtung auszuführen. Insbesondere ist dabei auch die Schwenkstellung der Kettensäge bezüglich dieser Proportionalität gewählt.

Erfindungsgemäß ist die Sägeanordnung als Kappsäge ausgebildet. Eine derartige Kappsäge umfasst eine Kettensäge, deren Sägebereich etwa 1×1m oder größer, insbesondere bis zu 2,6m x 2,6m oder größer ist. Die zum Schneiden vorgesehene Länge der Kettensäge bzw. der Führungsschiene oder der Sägekette ist bei dieser Ausführungsform größer als 1m.

Bei Kappsägen kann das Schneidgut im Wesentlichen entlang einer waagrechten Fläche der Kettensäge zugestellt werden. Der Sägebereich verläuft bevorzugt in einer Normalebene der Vorschubrichtung und ist insbesondere durch die Bewegung der Kettensäge entlang der Schnittrichtungen definiert. Die Kettensäge kann für den Schnitt entlang der Schnittrichtungen beispielsweise vertikal, also von oben nach unten bzw. von unten nach oben bewegt werden. Diese Bewegung geschieht durch die Bewegungsvorrichtung.

Alternativ dazu, aber nicht erfindungsgemäß, kann die Kettensäge auch stehend ausgebildet sein, wodurch die langgestreckte Kontur im Wesentlichen entlang einer vertikalen Richtung verläuft. Bei dieser Ausführungsform kann die Bewegungsvorrichtung dazu eingerichtet sein, die Kettensäge horizontal und quer zur Vorschubrichtung zu bewegen.

Der Schwenkantrieb der Kettensägenschwenkvorrichtung kann beispielsweise als Torqueantrieb, Torquemotor und/oder als stufenlos verstellbarer Stellmotor, gegebenenfalls mit Selbsthemmung oder Bremse, ausgebildet sein. Gegebenenfalls kann der Schwenkantrieb der Kettensägenschwenkvorrichtung Hydraulik- oder Pneumatikzylinder umfassen, durch die die Kettensäge beispielsweise in mehrere fixe Positionen verschwenkt werden kann.

In weiterer Folge wird die Erfindung nun anhand unterschiedlicher, nicht einschränkender, exemplarischer Ausführungsformen weiter beschrieben.
Fig. 1 zeigt eine schematische Aufsicht auf eine mögliche Ausgestaltung einer erfindungsgemäßen Sägeanordnung.
Fig. 2 zeigt einen möglichen Schnittverlauf einer erfindungsgemäßen Sägeanordnung.
Die Fig. 3a bis 3e zeigen unterschiedliche Ausführungsformen von Bewegungsvorrichtungen zur Bewegung der Kettensägen in schematischen Darstellungen.

Fig. 4 zeigt eine mögliche Ausgestaltung einer Kettensäge in einer schematischen Darstellung.
Fig. 5 zeigt eine weitere Ausgestaltung einer möglichen Anordnung einer Kettensäge in einer schematischen Darstellung.
Fig. 6 zeigt eine weitere schematische Ansicht einer Sägeanordnung, bei der auch schräge Schnittrichtungen möglich sind.

Wenn nicht anders angegeben, so entsprechen die in den Figuren angeführten Bezugszeichen folgenden Komponenten:
Kettensäge 1, Sägekette 2, Kettenantriebsrad 3, Kontur 4, auslaufender Abschnitt 5, Umlenkabschnitt 6, einlaufender Abschnitt 7, Bewegungsvorrichtung 8, Sägebereich 9, erste Schnittrichtung 10, zweite Schnittrichtung 11, Bewegungsantrieb 12, Bewegungsführung 13, Vorschubvorrichtung 14, Vorschubantrieb 15, Vorschubführung 16, Vorschubrichtung 17, Schneidgut 18, Kettensägenschwenkvorrichtung 19, erstes Schwenkteil 20, zweites Schwenkteil 21, Schwenkantrieb 22, Kettenantrieb 23, Führungsschiene 24, Freiraum 25, Niederhalter 26, Drehachse 27.

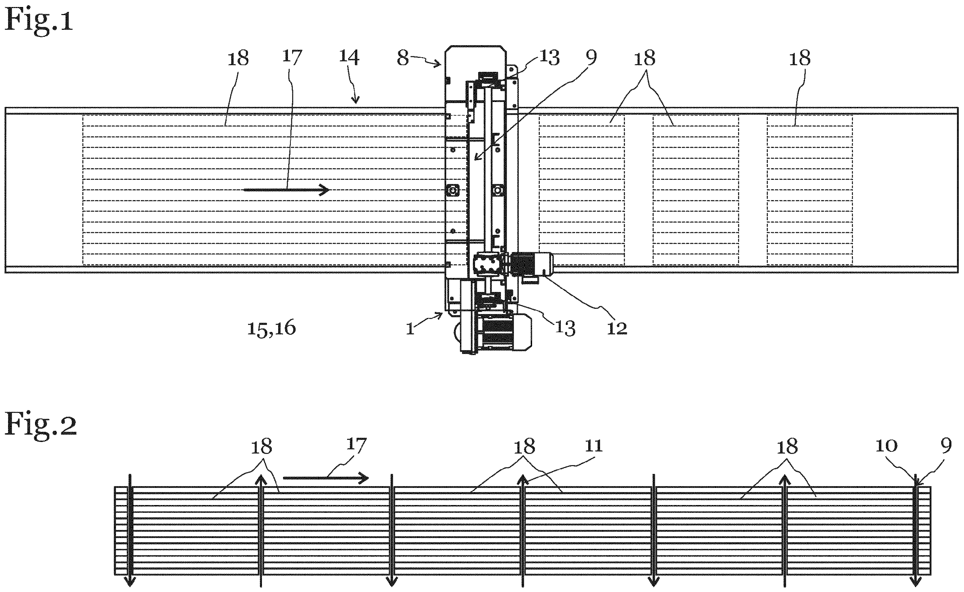

Fig. 1 zeigt eine Aufsicht einer möglichen Ausgestaltung einer Sägeanordnung mit einer Kettensäge 1, die über eine Bewegungsvorrichtung 8 bewegbar angeordnet ist. Die Bewegungsvorrichtung 8 umfasst einen Bewegungsantrieb 12 sowie eine Bewegungsführung 13. In der vorliegenden Ausführungsform ist der Bewegungsantrieb 12 ein elektrischer Drehantrieb, der über eine quer verlaufende Welle mit zwei Ketten verbunden ist. Diese Ketten können dadurch durch Antrieb des Bewegungsantriebs 12 bewegt werden. Mit den Ketten ist auch die Kettensäge 1 verbunden, sodass diese durch Bewegen der Ketten verlagert werden kann. Zur Führung der Kettensäge 1 bei deren Bewegung ist eine Bewegungsführung 13 vorgesehen, die in dieser Ansicht im Wesentlichen projizierend verläuft und beispielsweise eine gerade Schienenführung umfasst. Es entspricht jedoch auch dem Erfindungsgedanken, den Bewegungsantrieb 12 bzw. die Bewegungsführung 13 durch andere passende Mittel, beispielsweise als Spindelantrieb, Linearantrieb, Zahnstange oder Kettenzug, auszuführen.

Ferner umfasst die Sägeanordnung der Fig. 1 eine Vorschubvorrichtung 14 zum Bewegen des Schneidgutes 18 entlang einer Vorschubrichtung 17. Hierzu weist die Vorschubvorrichtung einen Vorschubantrieb 15 und eine Vorschubführung 16 auf, wobei der Vorschubantrieb 15 beispielsweise durch eine angetriebene Walze und die Vorschubführung 16 beispielsweise durch ein Auflageblech, eine Walzenanordnung, oder einen verfahrbaren Wagen bzw. Schlitten gebildet sind. Das Schneidgut 18 wird in der vorliegenden Ausführungsform der Kettensäge 1 zugeführt und in zu bestimmenden oder vorbestimmten Intervallen abgelängt.

Die Bewegung der Kettensäge 1 geschieht in der vorliegenden Ausführungsform im Wesentlichen entlang einer projizierend verlaufenden Richtung. In jenem Bereich, in dem das Schneidgut 18 durch die Kettensäge 1 zersägt wird, ist der Sägebereich 9 angeordnet. Der Sägebereich 9 ist insbesondere durch die Bewegung der Kettensäge 1 definiert.

Fig. 2 zeigt eine schematische Darstellung einer möglichen Schnittführung einer erfindungsgemäßen Sägeanordnung. Das Schneidgut 18 wird entlang einer Vorschubrichtung 17 bewegt und, wie bei Fig. 2, in regelmäßigen Abständen angehalten. In einem ersten Schritt wird das Schneidgut 18 entlang einer ersten Schnittrichtung 10 abgelängt. Insbesondere kann durch den ersten Schnitt, der in der vorliegenden Darstellung rechts angeordnet ist, ein Trimmen der Enden des Schneidgutes 18 erfolgen. In weiterer Folge wird bei dem Schnitt entlang der ersten Schnittrichtung 10 die Kettensäge 1 durch den gesamten Sägebereich 9 hindurch bewegt, wodurch das Schneidgut 18 gekappt bzw. abgelängt wird. In einem weiteren Schritt wird das Schneidgut 18 entlang der Vorschubrichtung 17 weiterbewegt. Die Kettensäge 1, die bei dem ersten Schnitt von einer ersten Stellung in eine zweite Stellung verfahren wurde, verharrt bei dieser Vorschubbewegung der Vorschubrichtung 17 in der zweiten Stellung. Ist das Schneidgut 18 in jener Position angeordnet, in der der zweite Schnitt erfolgen soll, so wird die Kettensäge 1 entlang der zweiten Schnittrichtung 11 wiederum durch den Sägebereich 9 bewegt, wodurch das Schneidgut 18 erneut abgelängt wird. Ein Leerhub, bei dem die Kettensäge 1 wieder in ihre erste Stellung gebracht wird, ohne dass das Schneidgut 18 bearbeitet wird, kann bei diesem Betrieb entfallen. In weiterer Folge kann das Schneidgut 18 weiterbewegt werden, um wiederum einen Schnitt entlang der ersten Schnittrichtung 10 durchzuführen.

Durch diese Anordnung und dieses Verfahren kann somit das Schneidgut 18 abwechselnd entlang der ersten Schnittrichtung 10 und der zweiten Schnittrichtung 11 abgelängt bzw. zerschnitten werden, wie durch die in Fig. 2 dargestellten Pfeile angedeutet.

Gegebenenfalls ist in allen Ausführungsformen vorgesehen, dass unterhalb der Transportfläche für das Schneidgut 18, insbesondere versenkt in der Transportfläche des Schneidgutes 18 ein Freiraum 25 gebildet ist, in dem die Kettensäge 1 angeordnet werden kann, sodass, wenn sich die Kettensäge in ihrer zweiten Position befindet, das Schneidgut weiter transportiert werden kann, ohne dass das Schneidgut an der Kettensäge 1 ansteht. Ferner ist auch bevorzugt vorgesehen, dass auf der anderen Seite des Sägebereichs 9 ein Freiraum 25 für die Kettensäge 1 zur Verfügung steht, in dem die Kettensäge 1 angeordnet werden kann, sodass das Schneidgut weitergefördert werden kann, wenn sich die Kettensäge 1 in ihrer ersten Position befindet.

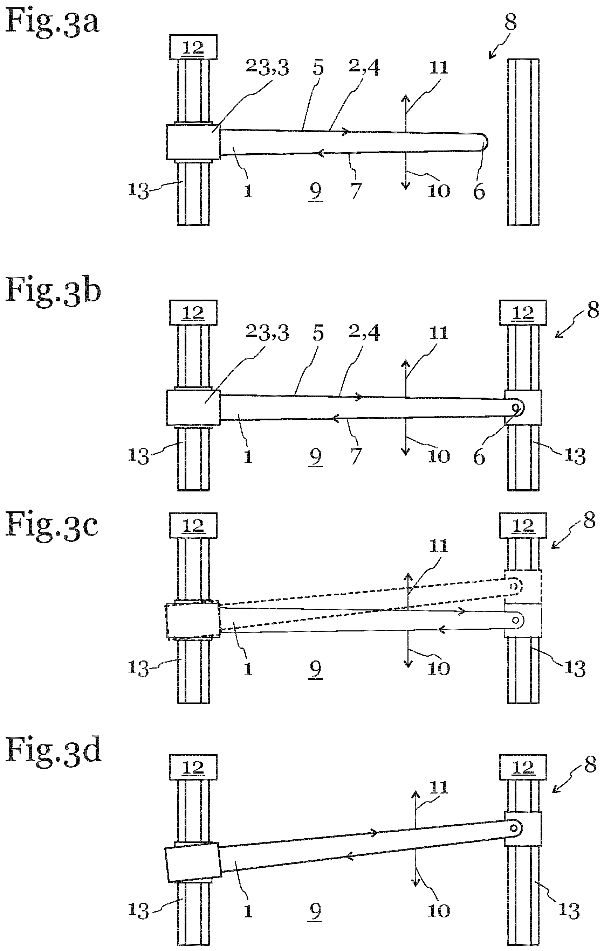

Die Figuren 3a bis 3e zeigen unterschiedliche mögliche Konzepte von Bewegungsvorrichtungen 8. Fig. 3a zeigt eine Bewegungsvorrichtung 8 mit einer Bewegungsführung 13 und einem Bewegungsantrieb 12 zur Bewegung der Kettensäge 1. Die Kettensäge 1 bzw. deren Sägekette 2 steht auskragend von einer Bewegungsführung 13 ab. Die Kettensäge 1 ist bei dieser Ausführungsform nur einseitig geführt und angetrieben. Die Kettensäge 1 umfasst, wie in allen Ausführungsformen 3a bis 3e, eine Sägekette 2, die entlang einer Kontur 4, ausgehend von einem durch einen Kettenantrieb 23 angetriebenen, nicht dargestellten, Kettenantriebsrad 3, einen auslaufenden Abschnitt 5 einen Umlenkabschnitt 6 und einen einlaufenden Abschnitt 7 durchläuft. Bei der vorliegenden Ausführungsform 3a kann die Kettensäge 1 durch eine Parallelführung im Wesentlichen parallel durch den Sägebereich 9 bewegt werden. Insbesondere kann diese Kettensäge 1 entlang einer ersten Schnittrichtung 10 und entlang einer zweiten Schnittrichtung 11 bewegt werden. Die Bewegungsvorrichtung 8 ist dadurch als Parallelbewegungsvorrichtung ausgebildet.

Die Ausführungsform der Fig. 3b entspricht im Wesentlichen der Ausführungsform 3a, nur dass zusätzlich die Kettensäge 1 auch im Bereich des Umlenkabschnitts 6 an einer Bewegungsführung 13 geführt ist. In der vorliegenden Ausführungsform umfasst die Bewegungsführung 13 somit zwei Führungen, die insbesondere an beiden Enden der Kettensäge 1 angeordnet sind, sodass die Kettensäge 1 beidseitig geführt ist. Der Antrieb dieser Parallelführung kann beispielsweise über den Bewegungsantrieb 12 erfolgen, wobei die Übertragung der Antriebsbewegung vom Bewegungsantrieb 12 auf die Kettensäge 1 einseitig, also nur an einer Führung, beidseitig, also an beiden Führungen oder einer anderen Stelle erfolgen kann. Auch bei der Ausführungsform der Fig. 3b ist eine Parallelführung der Kettensäge 1 gegeben, wodurch die Bewegungsvorrichtung 8 als Parallelbewegungsvorrichtung ausgebildet ist.

Fig. 3c zeigt eine weitere Ausführungsform einer möglichen Bewegungsvorrichtung 8, bei der die Kettensäge 1 beidseitig durch die Bewegungsführung 13 geführt ist. Der Bewegungsantrieb 12 umfasst die Möglichkeit, die Kettensäge 1 im Bereich der einen Führung unterschiedlich zu bewegen als im Bereich der anderen Führung, womit eine Schrägstellung und eine Schwenkbewegung der Kettensäge 1 ermöglicht ist. Durch diese Ausführungsform, insbesondere das gesteuerte und abwechselnde Antreiben der einzelnen Komponenten kann beispielsweise eine Verschwenkung der Kettensäge 1 bzw. ein Wiegeschnitt durchgeführt werden. Die Bewegungsvorrichtung 8 ist dadurch als kombinierte Schwenk-Parallelbewegungsvorrichtung ausgebildet.

Im Gegensatz dazu ist bei der Bewegungsvorrichtung 8 der Fig. 3d eine feste Schrägstellung der Kettensäge 1 eingestellt, wobei die schräggestellte Kettensäge 1 parallel geführt entlang der Bewegungsführung 13 durch den Sägebereich 9 bewegt werden kann.

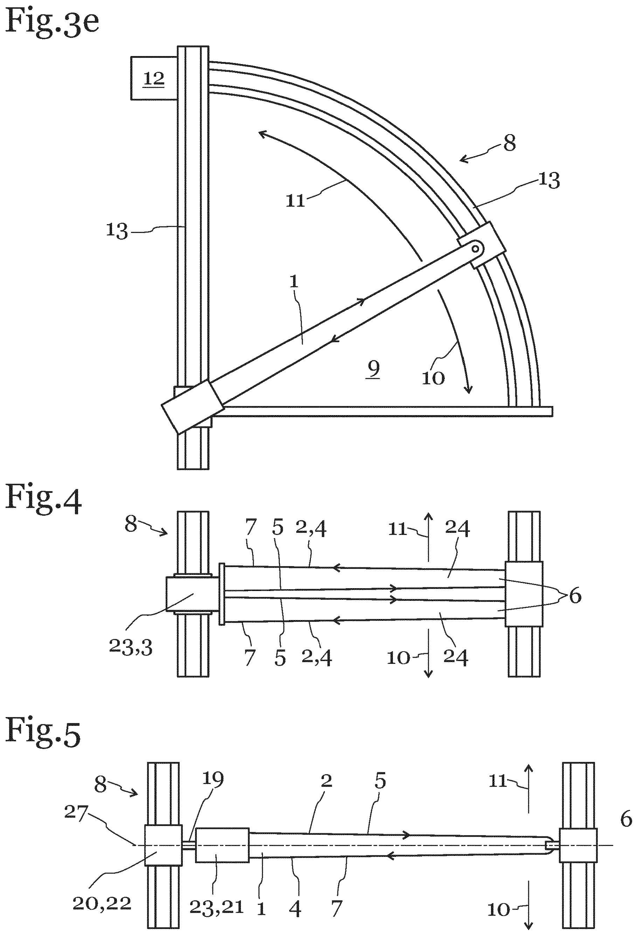

Fig. 3e zeigt eine weitere Ausführungsform einer möglichen Bewegungsvorrichtung 8. Bei dieser Ausführungsform ist die Kettensäge 1 schwenkbar angeordnet. Die erste Schnittrichtung 10 und die zweite Schnittrichtung 11 sind kreisbogenförmig ausgebildet. Der Bewegungsantrieb 12 ist dazu eingerichtet, die Kettensäge 1 entlang einer bogenförmigen Bewegungsführung 13 zu bewegen. Ferner umfasst die Bewegungsführung 13 in der vorliegenden Ausführungsform auch eine Dreh- bzw. Schwenkachse, an der die Kettensäge 1 drehbar gelagert ist. Die Bewegungsvorrichtung 8 ist dadurch als Schwenkbewegungsvorrichtung ausgebildet.

Fig. 4 zeigt ein weiteres Detail einer möglichen Ausführungsform einer erfindungsgemäßen Sägeanordnung in einer schematischen Ansicht. Bei dieser Ausführungsform umfasst die Kettensäge 1 zwei Sägeketten 2. Diese beiden Sägeketten 2 erstrecken sich jeweils entlang einer langgestreckten Kontur 4, ausgehend von einem Kettenantriebsrad 3, das in der vorliegenden Ausführungsform hinter einem Gehäuse verborgen ist, entlang einem auslaufenden Abschnitt 5 zu je einem Umlenkabschnitt 6 und je einem einlaufenden Abschnitt 7. Die beiden einlaufenden Abschnitte 7 sind entlang der Schnittrichtungen außenliegend angeordnet. Dadurch kann diese Kettensäge 1, in beide Schnittrichtungen 10, 11 bewegt werden, wobei in beiden Schnittrichtungen 10, 11 ein einlaufende Abschnitt 7 vorne, also Richtung Schneidgut ausgerichtet ist.

Insbesondere umfasst diese Kettensäge 10 zwei Führungsschienen 24 zur Führung der Sägeketten 2. Die beiden Führungsschienen 24 sind insbesondere parallel und/oder fluchtend zueinander angeordnet, sodass die beiden Sägeketten 2 bei einer Schnittbewegung entlang der ersten Schnittrichtung 10 und/oder entlang der zweiten Schnittrichtung 11 fluchtend angeordnet und somit in dem gleichen Sägespalt geführt werden können. Die erste Schnittrichtung 10 und die zweite Schnittrichtung 11 verlaufen in dieser Ansicht in der Bildebene. In allen Ausführungsformen mit zwei Führungsschienen 24 und/oder mit zwei Sägeketten 2 ist bevorzugt vorgesehen, dass die Konturen 4 und die Schnittrichtungen 11, 12 in einer gemeinsamen Ebene liegen.

Der Antrieb der beiden Sägeketten 2 kann beispielsweise über einen einzelnen Kettenantrieb 23 erfolgen, dessen Drehbewegung über ein Getriebe auf zwei Kettenantriebsräder 3 übertragen wird. Alternativ können auch zwei Kettenantriebe 23 vorgesehen sein, wobei jeder Kettenantrieb 23 auf je ein Kettenantriebsrad 3 zur Bewegung je einer Sägekette 2 wirkt.

Eine derartige Ausführungsform mit zwei Führungsschienen 24 und/oder mit zwei Sägeketten 2 kann an einer beliebigen Bewegungsvorrichtung gemäß den Figuren 3a bis 3e vorgesehen sein.

Fig. 5 zeigt Details einer weiteren Ausführungsform einer Sägeanordnung in einer schematischen Ansicht. Bei dieser Ausführungsform ist wiederum eine Kettensäge 1 an einer Bewegungsvorrichtung 8 vorgesehen. Insbesondere ist die Kettensäge 1 über eine Kettensägeschwenkvorrichtung 19 mit der Bewegungsvorrichtung 8 verbunden. Die Kettensägenschwenkvorrichtung 19 ist dazu geeignet und/oder eingerichtet, die Kettensäge 1 zu schwenken und/oder zu drehen. Insbesondere umfasst die Kettensägenschwenkvorrichtung 19 ein erstes Schwenkteil 20 und ein zweites Schwenkteil 21, wobei das zweite Schwenkteil 21 gegenüber dem ersten Schwenkteil 20 schwenk- bzw. drehbar angeordnet ist. In der in Fig. 5 dargestellten Stellung ist der einlaufende Abschnitt 7 oben liegend angeordnet, womit das Trennen des Schneidguts 18 entlang der zweiten Schnittrichtung erfolgen kann. Um nun ein Trennen entlang der ersten Schnittrichtung 10 zu ermöglichen, kann die Kettensägenschwenkvorrichtung 19 betätigt werden, wodurch die Kettensäge 1 derart verschwenkt wird, dass der einlaufende Abschnitt 7 in die erste Schnittrichtung 10 weist. In der vorliegenden Ausführungsform liegen die beiden Schnittrichtungen 10 und 11 gegengleich gerichtet in einer Ebene, womit die Kettensäge 1 um 180° verschwenkt werden muss, um von der ersten Schnittrichtung 10 in die zweite Schnittrichtung 11 bzw. von der zweiten Schnittrichtung 11 in die erste Schnittrichtung 10 gedreht zu werden. Die Drehung geschieht dabei beispielsweise entlang einer zentral verlaufenden Drehachse 27, die in der Ebene der Kontur 4 und der Führungsschiene 24 verläuft. Gegebenenfalls ist die Drehachse jedoch außermittig angeordnet, sodass die Führungsschiene 24 bzw. die Sägekette 2 mit einem gewissen Nachlauf bezüglich der jeweiligen Schnittrichtung versehen ist. Bevorzugt ist zur Betätigung der Kettensägenschwenkvorrichtung 19 ein Schwenkantrieb 22 vorgesehen, über den das zweite Schwenkteil 21 gegenüber dem ersten Schwenkteil 20 verschwenkt werden kann. Dieser Schwenkantrieb ist beispielsweise ein Drehantrieb wie beispielsweise ein elektrischer Drehantrieb.

Insbesondere kann der Schwenkantrieb 22 der Kettensägenschwenkvorrichtung 19 beispielsweise als Torqueantrieb, Torquemotor und/oder als stufenlos verstellbarer Stellmotor, gegebenenfalls mit Selbsthemmung oder Bremse, ausgebildet sein. Gegebenenfalls kann der Schwenkantrieb 22 der Kettensägenschwenkvorrichtung 19 Hydraulik- oder Pneumatikzylinder umfassen, durch die die Kettensäge 1 beispielsweise in mehrere fixe Positionen verschwenkt werden kann.

In bevorzugter Weise ist in allen Ausführungsformen, wie auch in der Ausführungsform der Fig. 5, der Kettenantrieb 23 mit dem zweiten Schwenkteil 21 verbunden, insbesondere starr oder drehfest verbunden, sodass durch Betätigung der Kettensägenschwenkvorrichtung 19 auch der Kettenantrieb 23 mitgeschwenkt wird. Dadurch kann ein verhältnismäßig kompliziertes Getriebe zur Übertragung der Bewegung des Kettenantriebs 23 auf die schwenkbar angeordnete Sägekette 2 vermieden werden. Insbesondere kann die Kettensäge 1 als herkömmliche Kettensäge ausgebildet sein, die über die Bewegungsvorrichtung und die Kettensägenschwenkvorrichtung 19 einerseits entlang der ersten Schnittrichtung 10 und entlang der zweiten Schnittrichtung 11 bewegt werden kann und andererseits um die Drehachse 27 verschwenkt werden kann.

Gemäß einer alternativen Ausführungsform kann jedoch auch der Kettenantrieb 23 am ersten Schwenkteil 20 vorgesehen sein. Die Übertragung der Drehung von dem Kettenantrieb 23 auf das Kettenantriebsrad 3 bzw. auf die Sägekette 2 kann dabei beispielsweise über ein Kegelradgetriebe erfolgen, wobei eine Welle des Kegelradgetriebes koaxial mit der Drehachse 27 des Kettensägenschwenkvorrichtung 19 angeordnet ist. Über ein im Bereich des zweiten Schwenkteils 21 vorgesehenes Kegelradpaar kann in weiterer Folge die Drehbewegung auf das Kettenantriebsrad 3 übertragen werden, das in dieser alternativen Ausführungsform am zweiten Schwenkteil 21 vorgesehen ist.

Eine derartige Ausführungsform mit einer Kettensägenschwenkvorrichtung 19 kann an einer beliebigen Bewegungsvorrichtung gemäß den Figuren 3a bis 3e vorgesehen sein.

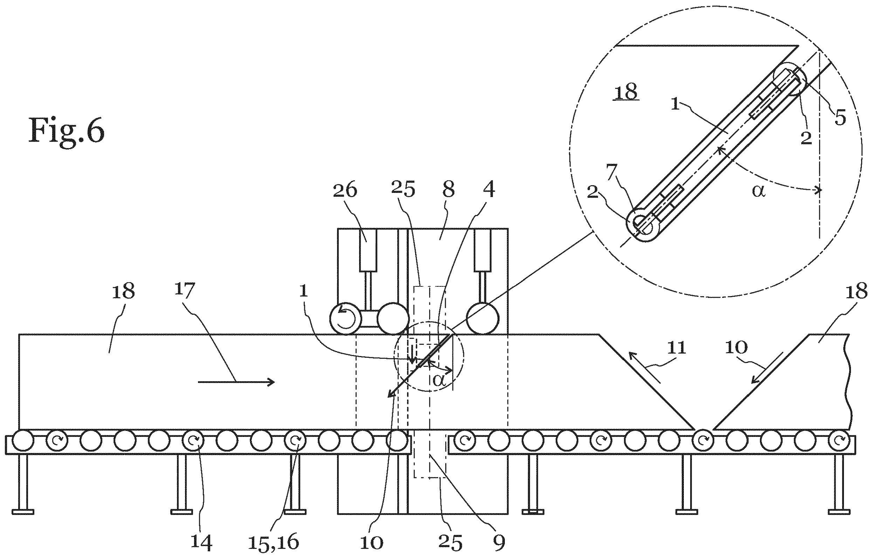

Fig. 6 zeigt eine weitere Ausführungsform einer erfindungsgemäßen Sägeanordnung in einer schematischen Seitenansicht, sowie ein Detail, das eine in den Schneidspalt eingeschnittene Kettensäge 1 zeigt.

Die Anordnung umfasst eine Kettensäge 1, mit einer Sägekette 2, die ausgehend von einem nicht sichtbaren Kettenantriebsrad 3 entlang einem vom Kettenantriebsrad 3 auslaufenden Abschnitt 5 in einen nicht dargestellten Umlenkabschnitt 6 und weiter in einen Richtung Kettenantriebsrad einlaufenden Abschnitt 7 verläuft.

Bevorzugt ist der einlaufende Abschnitt 7 der Sägekette 2 in Schnittrichtung gerichtet. Zur Bewegung der Kettensäge 1 und insbesondere zur Bewegung der Kettensäge 1 entlang einer ersten oder einer zweiten Schnittrichtung ist eine Bewegungsvorrichtung 8 vorgesehen. Diese Bewegungsvorrichtung 8 wirkt in der vorliegenden Ausführungsform, bevorzugt in allen Ausführungsformen, quer zur Vorschubrichtung 17 des Schneidguts 18. In der vorliegenden Ausführungsform sind die Schnittrichtungen 10, 11 schräg angeordnet und um einen gewissen Winkel α von der Lotrechten bzw. von der Waagrechten abweichend angeordnet. Die schräge Schnittführung wird in der vorliegenden Ausführungsform dadurch bewirkt, dass die Kettensäge 1 um den Winkel α schräggestellt ist, wobei gleichzeitig die Bewegungsvorrichtung 8 und die Vorschubvorrichtung 14 betätigt werden. Die Vorschubvorrichtung 14 umfasst mindestens einen Vorschubantrieb 15 und eine Vorschubführung 16. In der vorliegenden Ausführungsform sind der Vorschubantrieb 15 und die Vorschubführung 16 durch Walzen ausgebildet, die zumindest teilweise angetrieben sind. Dadurch kann das Schneidgut 18 entlang der Vorschubrichtung 17 bewegt und der Kettensäge 1 zugestellt werden. Durch eine synchronisierte Bewegung bzw. einen synchronisierten Betrieb der Bewegungsvorrichtung 8 und der Vorschubvorrichtung 14 kann die Geschwindigkeit der Bewegung der Kettensäge 1 gegenüber dem Schneidgut 18 derart gewählt werden, dass die Schnittbewegung mit der Schnittrichtung 10 übereinstimmt und ein gerader Schnitt entlang der ersten Schnittrichtung 10 erfolgt. Die Kettensäge 1 kann bei dieser Schnittbewegung parallel geführt und insbesondere vertikal parallel geführt werden.

Insbesondere ist im Sägebereich 9 bzw. entlang der beiden Schnittrichtungen 10 und 11 außerhalb des Sägebereichs 9 jeweils ein Freiraum 25 vorgesehen, in dem die Kettensäge 1 angeordnet werden kann, wenn ein Schnitt fertiggestellt ist. Insbesondere muss dieser Freiraum 25 derart bemessen sein, dass die gesamte Kettensäge 1, bzw. die gesamte Sägekette 2 aus dem Schneidgut 18 herausgeführt werden kann, sodass das Schneidgut 18 weitergefördert werden kann, ohne an ein Element der Kettensäge 1 anzustoßen. In diesem Freiraum 25 kann die Kettensäge 1 auch derart verschwenkt werden, dass ein weiterer Schritt in einer zweiten Schnittrichtung 11 oder in einer beliebigen weiteren Schnittrichtung erfolgen kann. Der Winkel der Schnittrichtung kann dabei durch die Betätigung der Vorschubvorrichtung 14, der Bewegungsvorrichtung 8 und der Kettensägenschwenkvorrichtung 19 bestimmt werden. So kann die Schnittrichtung 10 in einer Normalebene der Vorschubrichtung 17, schräg zur Vorschubrichtung 17 oder auch gegen die Vorschubrichtung 17 verlaufen.

Verläuft der Schnitt gegen die Vorschubrichtung 17, so bleibt die Bewegungsvorrichtung 8 während des Schnittes im Wesentlichen unbewegt. In der vorliegenden Konfiguration würde durch einen derartigen Schnitt ein horizontaler Schnitt durch das Schneidgut 18 durchgeführt werden.

In allen Ausführungsformen kann ein Niederhalter 26 vorgesehen sein, der das Schneidgut 18 zumindest einseitig mit einer Haltekraft beaufschlagt, insbesondere um es gegen die Vorschubführung 16 und/oder den Vorschubantrieb 15 zu drücken. Elemente des Niederhalters können entlang der Vorschubrichtung 17 vor und nach der Kettensäge 1 vorgesehen sein.

## Patentansprüche

1. Sägeanordnung, umfassend eine Kettensäge (1) mit einer umlaufenden Sägekette (2) und einem Kettenantriebsrad (3) zum Antrieb der Sägekette (2), wobei die Sägekette (2), ausgehend von dem Kettenantriebsrad (3), entlang einer langgestreckten Kontur (4), zuerst einen von dem Kettenantriebsrad (3) auslaufenden Abschnitt (5), dann einen Umlenkabschnitt (6) und dann einen Richtung Kettenantriebsrad (3) einlaufenden Abschnitt (7) durchläuft, wobei der auslaufende Abschnitt (5) der Sägekette (2) auf einer Seite der Kettensäge (1) angeordnet ist, und wobei der einlaufende Abschnitt (7) der Sägekette (2) auf der gegenüberliegenden Seite der Kettensäge (1) angeordnet ist, wobei eine Kettensägenschwenkvorrichtung (19) vorgesehen ist, die dazu eingerichtet ist, den einlaufenden Abschnitt (7) der Sägekette (2) in eine wählbare Schnittrichtung zu verschwenken, wobei die Kettensäge (1) über die Kettensägenschwenkvorrichtung (19) an einer Bewegungsvorrichtung (8) angebracht ist, wobei die Bewegungsvorrichtung (8) zur Bewegung der Kettensäge (1) durch einen Sägebereich (9) entlang unterschiedlicher, wählbarer Schnittrichtungen eingerichtet ist, und wobei die Bewegungsvorrichtung dazu eingerichtet ist, die Kettensäge für den Schnitt entlang der Schnittrichtungen in vertikaler Richtung zu bewegen, dadurch gezeichnet, dass die Bewegungsvorrichtung (8) einen ersten Betriebsmodus aufweist, in dem die Kettensäge (1) von einer ersten Stellung durch den Sägebereich (9) und durch das Schneidgut (18) in eine zweite Stellung bewegt wird oder bewegbar ist, dass die Bewegungsvorrichtung (8) einen zweiten Betriebsmodus aufweist, in dem die Kettensäge (1) von der zweiten Stellung wieder durch den Sägebereich (9) und durch das Schneidgut (18) in die erste Stellung bewegt wird oder bewegbar ist, und dass die Sägeanordnung dazu geeignet ist, einen Schnitt mit schräger Schnittrichtung auszuführen.

2. Sägeanordnung nach Anspruch 1, **dadurch gekennzeichnet, dass** eine Vorschubvorrichtung (14) mit einem Vorschubantrieb (15) und einer Vorschubführung (16) zur Bewegung des zu schneidenden Schneidgutes (18) vorgesehen ist, deren Vorschubrichtung insbesondere quer zur Schnittrichtung oder im Wesentlichen normal zum Sägebereich verläuft.

3. Sägeanordnung nach einem der Ansprüche 1 bis 2, **dadurch gekennzeichnet,**
- **dass** die Kettensägenschwenkvorrichtung (19) ein erstes Schwenkteil (20) und ein zweites Schwenkteil (21) umfasst,
- **dass** das erste Schwenkteil (20) an der Bewegungsvorrichtung (8) angebracht ist und dadurch über die Bewegungsvorrichtung bewegbar ist,
- **dass** am zweiten Schwenkteil (21) die Kettensäge (1) angebracht ist,
- und **dass** das zweite Schwenkteil (21) gegenüber dem ersten Schwenkteil (20) einen gegebenenfalls fixierbaren Schwenkfreiheitsgrad um eine Drehachse (27) aufweist.

4. Sägeanordnung nach Anspruch 3, **dadurch gekennzeichnet, dass** ein Schwenkantrieb (22) zur gesteuerten Verschwenkung des zweiten Schwenkteils (21) gegenüber dem ersten Schwenkteil (20) und damit auch zur gesteuerten Verschwenkung der Kettensäge (1) vorgesehen ist

5. Sägeanordnung nach einem der Ansprüche 3 oder 4, **dadurch gekennzeichnet,**
- **dass** ein Kettenantrieb (23) zum Antrieb des Kettenantriebsrads (3) und dadurch zum Antrieb der Sägekette (2) vorgesehen ist,
- und **dass** der Kettenantrieb (3) mit dem zweiten Schwenkteil (21) verbunden und insbesondere drehverbunden ist und/oder an dem zweiten Schwenkteil (21) angebracht ist.

6. Sägeanordnung nach Ansprüche 1 bis 5, **dadurch gekennzeichnet, dass** die Bewegungsvorrichtung (8) einen Bewegungsantrieb (12) und eine Bewegungsführung (13) zur Bewegung der Kettensäge (1) entlang der Schnittrichtungen umfasst.

7. Sägeanordnung nach einem der Ansprüche 2 bis 6, **dadurch gekennzeichnet, dass** die Bewegungsvorrichtung (8) und die Vorschubvorrichtung (14) einen Betriebsmodus aufweisen, in dem ein schräges Ablängen oder Zerschneiden des Schneidgutes (18) durch gleichzeitiges, synchronisiertes Betreiben der Bewegungsvorrichtung (8) und der Vorschubvorrichtung (14) und durch Schrägstellung der Kettensäge (1) in die schräge Schnittrichtung erfolgt.

8. Sägeanordnung nach einem der Ansprüche 2 bis 7, **dadurch gekennzeichnet,**
- **dass** eine Steuerungseinrichtung zur Steuerung und insbesondere zum gemeinsamen und/oder synchronisierten Betrieb der Bewegungsvorrichtung (8) und der Vorschubvorrichtung (14) und zur Steuerung der Kettensägenschwenkvorrichtung (19) vorgesehen ist, und/oder
- **dass** die Bewegungsvorrichtung (8) als Parallelbewegungsvorrichtung zur Parallelführung der Kettensäge (1) quer und insbesondere normal zur Vorschubrichtung (17) ausgebildet ist.

9. Sägeanordnung nach einem der Ansprüche 1 bis 8, **dadurch gekennzeichnet, dass** der Richtung Kettenantriebsrad (3) einlaufende Abschnitt (7) der Sägekette (2) bei allen Schnittrichtungen (10, 11) und/oder in allen Betriebsmodi in Schnittrichtung weist und dadurch entlang der Schnittrichtung vorne angeordnet ist.

10. **Verfahren** zum Betrieb einer Sägeanordnung, wobei die Sägeanordnung eine Kettensäge (1) mit einer umlaufenden Sägekette (2) und einem Kettenantriebsrad (3) zum Antrieb der Sägekette (2) umfasst, wobei die Sägekette (2), ausgehend von dem Kettenantriebsrad (3), entlang einer langgestreckten Kontur (4), zuerst einen von dem Kettenantriebsrad (3) auslaufenden Abschnitt (5), dann einen Umlenkabschnitt (6) und dann einen Richtung Kettenantriebsrad (3) einlaufenden Abschnitt (7) durchläuft, wobei der auslaufende Abschnitt (5) der Sägekette (2) auf einer Seite der Kettensäge (1) angeordnet ist, und wobei der einlaufende Abschnitt (7) der Sägekette (2) auf der gegenüberliegenden Seite der Kettensäge (1) angeordnet ist und wobei eine Kettensägenschwenkvorrichtung (19) vorgesehen ist, die dazu eingerichtet ist, den einlaufenden Abschnitt (7) der Sägekette (2) in eine wählbare Schnittrichtung zu verschwenken, wobei eine erste Schnittrichtung (10) gewählt wird, wobei die Kettensäge (1) durch Betätigen der Kettensägenschwenkvorrichtung (19) in die erste Schnittrichtung (10) ausgerichtet wird und wobei das Schneidgut (18) entlang der ersten Schnittrichtung (10) zerschnitten wird, und wobei die Kettensäge (1) durch eine Bewegungsvorrichtung (8) in vertikaler Richtung entlang der Schnittrichtungen bewegt wird, **dadurch gekennzeichnet, dass** das Schneidgut (18) entlang einer Vorschubrichtung (17) weitergefördert wird, wobei eine zweite Schnittrichtung (11) gewählt wird, wobei die Kettensäge (1) durch Betätigen der Kettensägenschwenkvorrichtung (19) durch Drehen um eine Drehachse (27) in die zweite Schnittrichtung (11) ausgerichtet wird und wobei das Schneidgut (18) entlang der zweiten Schnittrichtung (11) zerschnitten wird, und dass die Sägeanordnung einen Schnitt mit schräger Schnittrichtung ausführt.

11. Verfahren nach Anspruch 10, **dadurch gekennzeichnet, dass** die erste (10) und/oder die zweite Schnittrichtung (11) schräg zur Vorschubrichtung (17) verläuft.

12. Verfahren nach einem der Ansprüche 10 bis 11, **dadurch gekennzeichnet, dass** zum Zerschneiden des Schneidgutes (18) entlang einer schrägen Schnittrichtung
- die Kettensäge (1) schräggestellt und dadurch in Schnittrichtung ausgerichtet wird,
- die Kettensäge (1) während dem Schneidvorgang quer zur Vorschubrichtung (17) bewegt und insbesondere parallel durch den Sägebereich (9) bewegt wird,
- und das Schneidgut (18) während dem Schneidvorgang entlang der Vorschubrichtung (17) bewegt wird.

13. Verfahren nach einem der Ansprüche 10 bis 12, **dadurch gekennzeichnet,**
- **dass** die Kettensäge (1) zum Zerschneiden entlang der ersten und/oder zweiten Schnittrichtung (10, 11) durch Betätigung einer Bewegungsvorrichtung (8) bewegt wird, und/oder
- **dass** das Schneidgut (18) durch Betätigen einer Vorschubvorrichtung (14) entlang der Vorschubrichtung (17) bewegt wird.

14. Verfahren nach Anspruch 13, **dadurch gekennzeichnet,**
- **dass** das Schneidgut (18) durch Betätigen der Bewegungsvorrichtung (8) und der Vorschubvorrichtung (14) abwechselnd entlang der ersten und der zweiten Schnittrichtung (10, 11) abgelängt oder geschnitten wird, und/oder
- **dass** der Richtung Kettenantriebsrad (3) einlaufende Abschnitt (7) der Sägekette (2), beim Zerschneiden entlang der ersten Schnittrichtung (10) und beim Zerschneiden entlang der zweiten Schnittrichtung (11), in die jeweilige Schnittrichtung weist.

15. Verfahren nach einem der Ansprüche 10 bis 14, **dadurch gekennzeichnet,**
- **dass** der auslaufenden Abschnitt (5) der Sägekette (2) auf einer Seite der Kettensäge (1) angeordnet ist,
- **dass** der einlaufenden Abschnitt (7) der Sägekette (2) auf der gegenüberliegenden Seite der Kettensäge (1) angeordnet ist
- und **dass** die Kettensäge (1) nach dem Zerschneiden des Schneidgutes (18) entlang der ersten Schnittrichtung (10) und vordem Zerschneiden des Schneidgutes entlang der zweiten Schnittrichtung (11), und bei weiteren Schnitten auch nach dem erneuten Zerschneiden des Schneidgutes (18) entlang der zweiten Schnittrichtung (11) und vor dem erneuten Zerschneiden des Schneidgutes (18) entlang der ersten Schnittrichtung (10), durch Betätigen einer Kettensägenschwenkvorrichtung (19) verschwenkt wird.

## Claims

1. A saw assembly, comprising a chainsaw (1) with a circulating saw chain (2) and a chain drive wheel (3) for driving the saw chain (2), wherein the saw chain (2), starting from the chain drive wheel (3), runs along an elongated contour (4), firstly through a section (5) running out from the chain drive wheel (3), then through a deflection section (6) and then through a section (7) running in towards the chain drive wheel (3), wherein the outgoing section (5) of the saw chain (2) is arranged on one side of the chainsaw (1), and wherein the incoming section (7) of the saw chain (2) is arranged on the opposite side of the chainsaw (1), wherein a chainsaw pivoting device (19) is provided, which is configured to pivot the incoming section (7) of the saw chain (2) in a selectable cutting direction, wherein the chainsaw (1) is attached to a movement device (8) via the chainsaw pivoting device (19), wherein the movement device (8) is configured to move the chainsaw (1) through a sawing area (9) along different, selectable cutting directions, and wherein the movement device is configured to move the chainsaw for cutting along the cutting directions in the vertical direction, **characterized**
**in that** the movement device (8) has a first operating mode, in which the chainsaw (1) is or can be moved from a first position through the sawing area (9) and through the cutting material (18) to a second position,
**in that** the movement device (8) has a second operating mode, in which the chainsaw (1) is or can be moved from the second position through the sawing area (9) and through the cutting material (18) to the first position,
and **in that** the saw assembly is adapted to make a cut with an oblique cutting direction.

2. The saw assembly according to claim 1, **characterized in that** a feed device (14) is provided with a feed drive (15) and a feed guide (16) for moving the cutting material (18) to be cut, the feed direction of which is in particular transverse to the cutting direction or substantially normal to the sawing area.

3. The saw assembly according to one of claims 1 to 2, **characterized**
- **in that** the chainsaw pivoting device (19) comprises a first pivoting part (20) and a second pivoting part (21),
- **in that** the first pivoting part (20) is mounted on the movement device (8) and can thus be moved via the movement device,
- **in that** the chainsaw (1) is mounted on the second pivoting part (21),
- and **in that** the second pivoting part (21) has a degree of swivel freedom about an axis of rotation (27) which can optionally be fixed with respect to the first pivoting part (20).

4. The saw assembly according to claim 3, **characterized in that** a pivot drive (22) is provided for controlled pivoting of the second pivoting part (21) with respect to the first pivoting part (20) and thus also for controlled pivoting of the chainsaw (1).

5. The saw assembly according to one of claims 3 or 4, **characterized**
- **in that** a chain drive (23) is provided for driving the chain drive wheel (3) and thus for driving the saw chain (2),
- **in that** the chain drive (3) is connected, in particular rotationally connected, to the second pivoting part (21) and/or mounted on the second pivoting part (21).

6. The saw assembly according to one of claims 1 to 5, **characterized in that** the movement device (8) comprises a movement drive (12) and a movement guide (13) for moving the chainsaw (1) along the cutting directions.

7. The saw assembly according to one of claims 2 to 6, **characterized in that** the movement device (8) and the feed device (14) have an operating mode, in which an oblique cutting to length or cutting up of the cutting material (18) is done by simultaneous, synchronized operation of the movement device (8) and the feed device (14) and by oblique positioning of the chainsaw (1) in the oblique cutting direction.

8. The saw assembly according to one of claims 2 to 7, **characterized**
- **in that** a control device is provided for controlling and, in particular, for the joint and/or synchronized operation of the movement device (8) and the feed device (14) and for controlling the chainsaw pivoting device (19), and/or
- **in that** the movement device (8) is designed as a parallel movement device for parallel guidance of the chainsaw (1) transversely and in particular normal to the feed direction (17).

9. The saw assembly according to one of claims 1 to 8, **characterized in that** the section (7) of the saw chain (2) running in towards the chain drive wheel (3) points in the cutting direction in all cutting directions (10, 11) and/or in all operating modes and is thereby arranged at the front along the cutting direction.

10. A **method** for operating a saw assembly, wherein the saw assembly comprises a chainsaw (1) with a circulating saw chain (2) and a chain drive wheel (3) for driving the saw chain (2), wherein the saw chain (2), starting from the chain drive wheel (3), runs along an elongated contour (4), firstly through a section (5) running out from the chain drive wheel (3), then through a deflection section (6) and then through a section (7) running in towards the chain drive wheel (3), wherein the outgoing section (5) of the saw chain (2) is arranged on one side of the chainsaw (1), and wherein the incoming section (7) of the saw chain (2) is arranged on the opposite side of the chainsaw (1), and wherein a chainsaw pivoting device (19) is provided, which is configured to pivot the incoming section (7) of the saw chain (2) in a selectable cutting direction, wherein a first cutting direction (10) is selected, wherein the chainsaw (1) is aligned in the first cutting direction (10) by actuating the chainsaw pivoting device (19), and wherein the cutting material (18) is cut up along the first cutting direction (10), and wherein the chainsaw (1) is moved in the vertical direction along the cutting directions by a movement device (8),
**characterized**
**in that** the cutting material (18) is conveyed further along a feed direction (17), wherein a second cutting direction (11) is selected, wherein the chainsaw (1) is aligned in the second cutting direction (11) by actuating the chainsaw pivoting device (19) by rotation about an axis of rotation (27), and wherein the cutting material (18) is cut up along the second cutting direction (11), and
**in that** the saw assembly performs a cut with an oblique cutting direction.

11. The method according to claim 10, **characterized in that** the first (10) and/or the second cutting direction (11) are oblique to the feed direction (17).

12. The method according to one of claims 10 to 11, **characterized in that**, for cutting up the cutting material (18) along an oblique cutting direction,
- the chainsaw (1) is inclined and thus aligned in the cutting direction,
- the chainsaw (1) is moved transversely to the feed direction (17) during the cutting process and, in particular, is moved parallel through the sawing area (9),
- and the cutting material (18) is moved along the feed direction (17) during the cutting process.

13. The method according to one of claims 10 to 12, **characterized**
- **in that** the chainsaw (1) is moved along the first and/or the second cutting direction (10, 11) for cutting up by actuating a movement device (8), and/or
- **in that** the cutting material (18) is moved along the feed direction (17) by actuating a feed device (14).

14. The method according to claim 13, **characterized**
- **in that** the cutting material (18) is cut in length or cut up alternately along the first and the second cutting direction (10, 11) by actuating the movement device (8) and the feed device (14), and/or
- **in that** the section (7) of the saw chain (2) running in towards the chain drive wheel (3) points in the respective cutting direction when cutting along the first cutting direction (10) and when cutting along the second cutting direction (11).

15. The method according to one of claims 10 to 14, **characterized**
- **in that** the outgoing section (5) of the saw chain (2) is arranged on one side of the chainsaw (1),
- **in that** the incoming section (7) of the saw chain (2) is arranged on the opposite side of the chainsaw (1),
- and **in that** the chainsaw (1) is pivoted by actuating a chainsaw pivoting device (19) after the cutting of the cutting material (18) along the first cutting direction (10) and before the cutting of the cutting material along the second cutting direction (11), and in the case of further cuts also after the cutting of the cutting material (18) along the second cutting direction (11) and before the cutting of the cutting material (18) along the first cutting direction (10) again.

## Revendications

1. Un ensemble de scie, comprenant une scie à chaîne (1) avec une chaîne à scier (2) circulante et une roue d'entraînement de chaîne (3) pour l'entraînement de la chaîne à scier (2), dans lequel la chaîne à scier (2), en partant de la roue d'entraînement de chaîne (3), le long d'un contour (4) allongé, passe d'abord par une section (5) sortant de la roue d'entraînement de chaîne (3), puis une section de renvoi (6) et ensuite une section (7) entrant en direction de la roue d'entraînement de chaîne (3), dans lequel la section de sortie (5) de la chaîne de scie (2) est disposée sur un côté de la scie à chaîne (1) et dans lequel la section d'entrée (7) de la chaîne de scie (2) est disposée sur le côté opposé de la scie à chaîne (1), dans lequel un dispositif de pivotement de la scie à chaîne (19) est prévu, qui est configuré pour faire pivoter la section d'entrée (7) de la chaîne de scie (2) dans une direction de coupe sélectionnable, dans lequel la scie à chaîne (1) est montée sur un dispositif de déplacement (8) par l'intermédiaire du dispositif de pivotement de la scie à chaîne (19), dans lequel le dispositif de déplacement (8) est configuré pour déplacer la scie à chaîne (1) à travers une zone de sciage (9) le long de différentes directions de coupe pouvant être sélectionnées, et dans lequel le dispositif de déplacement est configuré pour déplacer la scie à chaîne dans la direction verticale pour la coupe le long des directions de coupe, **caractérisé**
**en ce que** le dispositif de déplacement (8) présente un premier mode de fonctionnement dans lequel la scie à chaîne (1) est déplacée ou peut être déplacée d'une première position à travers la zone de sciage (9) et à travers le matériau à couper (18) dans une deuxième position,
**en ce que** le dispositif de déplacement (8) présente un deuxième mode de fonctionnement dans lequel la scie à chaîne (1) est déplacée ou peut être déplacée de la deuxième position à nouveau à travers la zone de sciage (9) et à travers le matériau à couper (18) dans la première position,
et **en ce que** l'ensemble de scie est adapté pour effectuer une coupe avec une direction de coupe oblique.

2. L'ensemble de scie selon la revendication 1, **caractérisé en ce qu'**il est prévu un dispositif d'avance (14) avec un entraînement d'avance (15) et un guidage d'avance (16) pour déplacer le matériau à couper (18), dont la direction d'avance s'étend en particulier transversalement à la direction de coupe ou sensiblement perpendiculairement à la zone de sciage.

3. L'ensemble de scie selon l'une des revendications 1 à 2, **caractérisé**
- **en ce que** le dispositif de pivotement de la scie à chaîne (19) comprend une première partie pivotante (20) et une deuxième partie pivotante (21),
- **en ce que** la première partie pivotante (20) est monté sur le dispositif de déplacement (8) et peut donc être déplacée par l'intermédiaire du dispositif de déplacement,
- **en ce que** la scie à chaîne (1) est monté sur la deuxième partie pivotante (21),
- et **en ce que** la deuxième partie pivotante (21) présente, par rapport à la première partie pivotante (20), un degré de liberté de pivotement éventuellement fixable autour d'un axe de rotation (27).

4. L'ensemble de scie selon la revendication 3, **caractérisé en ce qu'**il est prévu un entraînement pivotant (22) pour le pivotement commandé de la deuxième partie pivotante (21) par rapport à la première partie pivotante (20) et donc également pour le pivotement commandé de la scie à chaîne (1).

5. L'ensemble de scie selon l'une des revendications 3 ou 4, **caractérisé**
- **en ce qu'**il est prévu un entraînement de chaîne (23) pour l'entraînement de la roue d'entraînement de chaîne (3) et ainsi pour l'entraînement de la chaîne à scier (2),
- et **en ce que** l'entraînement de chaîne (3) est relié et en particulier relié par rotation à la deuxième partie pivotante (21) et/ou monté sur la deuxième partie pivotante (21).

6. L'ensemble de scie selon l'une des revendications 1 à 5, **caractérisé en ce que** le dispositif de déplacement (8) comprend un entraînement de déplacement (12) et un guide de déplacement (13) pour déplacer la scie à chaîne (1) le long des directions de coupe.

7. L'ensemble de scie selon l'une des revendications 2 à 6, **caractérisé en ce que** le dispositif de déplacement (8) et le dispositif d'avance (14) présentent un mode de fonctionnement dans lequel un coupage à longueur ou une découpe oblique du matériau à couper (18) est réalisé par un fonctionnement simultané et synchronisé du dispositif de déplacement (8) et du dispositif d'avance (14) et par une inclinaison de la scie à chaîne (1) dans la direction de coupe oblique.

8. L'ensemble de scie selon l'une des revendications 2 à 7, **caractérisé**
- **en ce qu'**il est prévu un dispositif de commande pour la commande et en particulier pour le fonctionnement commun et/ou synchronisé du dispositif de mouvement (8) et du dispositif d'avance (14) et pour la commande du dispositif de pivotement de la scie à chaîne (19), et/ou
- **en ce que** le dispositif de déplacement (8) est conçu comme un dispositif de déplacement parallèle pour le guidage parallèle de la scie à chaîne (1) transversalement et en particulier perpendiculairement à la direction d'avance (17).

9. L'ensemble de scie selon l'une des revendications 1 à 8, **caractérisé en ce que** la portion d'entrée (7) de la chaîne de scie (2) entrant en direction de la roue d'entraînement de chaîne (3) est orientée dans la direction de coupe pour toutes les directions de coupe (10, 11) et/ou dans tous les modes de fonctionnement et est ainsi disposée à l'avant le long de la direction de coupe.

10. Un **procédé** pour faire fonctionner un ensemble de scie, dans lequel l'ensemble de scie comprend une scie à chaîne (1) avec une chaîne à scier (2) circulante et une roue d'entraînement de chaîne (3) pour l'entraînement de la chaîne à scier (2), dans lequel la chaîne à scier (2), en partant de la roue d'entraînement de chaîne (3), le long d'un contour (4) allongé, passe d'abord par une section (5) sortant de la roue d'entraînement de chaîne (3), puis une section de renvoi (6) et ensuite une section (7) entrant en direction de la roue d'entraînement de chaîne (3), dans lequel la section de sortie (5) de la chaîne de scie (2) est disposée sur un côté de la scie à chaîne (1) et dans lequel la section d'entrée (7) de la chaîne de scie (2) est disposée sur le côté opposé de la scie à chaîne (1), et dans lequel un dispositif de pivotement de la scie à chaîne (19) est prévu, qui est configuré pour faire pivoter la section d'entrée (7) de la chaîne de scie (2) dans une direction de coupe sélectionnable, dans lequel une première direction de coupe (10) est sélectionnée, dans lequel la scie à chaîne (1) est orientée en actionnant le dispositif de pivotement de la scie à chaîne (19) dans la première direction de coupe (10) et dans lequel le matériau à couper (18) est coupé le long de la première direction de coupe (10), et dans lequel la scie à chaîne (1) est déplacée dans la direction verticale le long des directions de coupe par un dispositif de déplacement (8),
**caractérisé**
**en ce que** le matériau à couper (18) continue à être transporté le long d'une direction d'avance (17), dans lequel une deuxième direction de coupe (11) est sélectionnée, dans lequel la scie à chaîne (1) est orientée dans la deuxième direction de coupe (11) en actionnant le dispositif de pivotement de la scie à chaîne (19) par rotation autour d'un axe de rotation (27) et dans lequel le matériau à couper (18) est découpé le long de la deuxième direction de coupe (11), et
**en ce que** l'ensemble de scie exécute une coupe avec une direction de coupe oblique.

11. Le procédé selon la revendication 10, **caractérisé en ce que** la première (10) et/ou la deuxième direction de coupe (11) est/sont oblique/s par rapport à la direction d'avance (17).

12. Le procédé selon l'une des revendications 10 à 11, **caractérisé en ce que**, pour couper le matériau à couper (18) le long de la direction de coupe,
- la scie à chaîne (1) est inclinée et donc orientée dans la direction de coupe,
- la scie à chaîne (1) est déplacée transversalement à la direction d'avance (17) et en particulier parallèlement à travers la zone de sciage (9) lors du processus de coupe,
- et le matériau à couper (18) est déplacé le long de la direction d'avance (17) lors du processus de coupe.

13. Le procédé selon l'une des revendications 10 à 12, **caractérisé**
- **en ce que**, pour découper, la scie à chaîne (1) est déplacée le long de la première et/ou la deuxième direction de coupe (10, 11) en actionnant un dispositif de déplacement (8), et/ou
- **en ce que** le matériau à couper (18) est déplacé le long de la direction d'avance (17) en actionnant un dispositif d'avance (14).

14. Le procédé selon la revendication 13, **caractérisé**
- **en ce que** le matériau à couper (18) est coupé à longueur ou découpé en actionnant le dispositif de déplacement (8) et le dispositif d'avance (14) alternativement le long de la première et de la deuxième direction de coupe (10, 11), et/ou
- **en ce que** la section d'entrée (7) de la chaîne de scie (2) entrant en direction de la roue d'entraînement de chaîne (3) est orientée dans la direction de coupe respective lors de la découpe le long de la première direction de coupe (10) et lors de la découpe le long de la deuxième direction de coupe (11).

15. Le procédé selon l'une des revendications 10 à 14, **caractérisé**
- **en ce que** la section de sortie (5) de la chaîne à scier (2) est disposée sur un côté de la scie à chaîne (1),
- **en ce que** la section d'entrée (7) de la chaîne à scier (2) est disposée sur le côté opposé de la scie à chaîne (1)
- et **en ce que** la scie à chaîne (1) est pivotée en actionnant un dispositif de pivotement de la scie à chaîne (19) après la découpe du matériau à découper (18) le long de la première direction de coupe (10) et avant la découpe du matériau à découper le long de la deuxième direction de coupe (11), et pour d'autres coupes également après la nouvelle découpe du matériau à découper (18) le long de la deuxième direction de coupe (11) et avant la nouvelle découpe du matériau à découper (18) le long de la première direction de coupe (10).
